# EUROPÄISCHE PATENTSCHRIFT

(11) **EP 0 838 374 B1**
(45) Veröffentlichungstag und Bekanntmachung des Hinweises auf die Patenterteilung: **09.01.2002**
(21) Anmeldenummer: 97118560.8
(22) Anmeldetag: 24.10.1997
(51) Int. Cl.: B60R 21/00

(54) **Auslösevorrichtung**
Triggering device
Dispositif de déclenchement

(30) Priorität: 24.10.1996 DE 19644324
(43) Veröffentlichungstag der Anmeldung: 29.04.1998
(73) Patentinhaber: AUTOLIV DEVELOPMENT AB, S-447 83 Vargarda (SE); Sagem - Autoliv, 75783 Paris Cedex 16 (FR)
(72) Erfinder: Kellerhals, Peter, 85229 Markt Indersdorf (DE); Görnig, Thomas, 85229 Markt Indersdorf (DE); de Mersseman, Bernard, 94210 La Varenne, Saint Hilaire (FR); Bourcart, Denis, 76220 Gournay-en-Bray (FR)
(74) Vertreter: Gossel, Hans K., Dipl.-Ing.

(56) Entgegenhaltungen:
- EP-A- 0 444 866
- WO-A-89/03999
- WO-A-92/05979
- DE-A- 4 424 551
- US-A- 5 182 459

## Beschreibung

Die Erfindung betrifft eine Auslösevorrichtung für Fahrzeuge zum Auslösen mindestens einer Sicherheitseinrichtung bei einem Aufprall nach dem Oberbegriff des Patentanspruchs 1.

Auslösevorrichtungen werden in Fahrzeugen eingesetzt, um bei einem Unfall aktive Sicherheitseinrichtungen zum Schutze der Insassen auszulösen. Solche Sicherheitseinrichtungen können z.B. Airbags oder Gurtstraffersysteme sein.

Das Auslösen einer Sicherheitseinrichtung geschieht in der Regel durch einen Elektrozünder, der einen pyrotechnischen Treibsatz innerhalb eines Gasgenerators zündet. Der Elektrozünder ist dabei in einer Auslöseschaltung verschaltet, wobei die Auslöseschaltung im einfachsten Fall aus einem Kondensator und zwei in Reihe geschalteten Schaltelementen besteht. Die für einen oder mehrere Elektrozünder erforderliche Zündenergie wird in dem Kondensator gespeichert, der im normalen Fahrbetrieb durch eine Ladeeinrichtung aufgeladen wird. Der Elektrozünder zündet bei einem Aufprall des Fahrzeugs, sobald beide Schaltelemente geschlossen sind, so daß sich die in dem Kondensator gespeicherte Energie über den angeschlossenen Elektrozünder entladen kann.

Zum zuverlässigen Schließen der beiden Schaltelemente sind zwei getrennte Vorrichtungen vorgesehen, nämlich eine Aufprallerkennungsvorrichtung und eine Aktivierungsvorrichtung. Die Aufprallerkennungsvorrichtung besteht aus einem Beschleunigungssensor, dessen Ausgangssignal einer Auswerteschaltung zur Erzeugung eines Aufprallerkennungssignals zugeführt ist. Die Auswerteschaltung bildet dabei beispielsweise das Integral des vom Beschleunigungssensor gelieferten Beschleunigungssignals und erzeugt das Aufprallerkennungssignal, sobald die festgestellte Geschwindigkeitsänderung über einem vorgegebenen Wert liegt. Das Aufprallerkennungssignal bewirkt wiederum das Schließen des zugehörigen Schaltelements. Die für diese Baugruppe verwendeten Beschleunigungssensoren müssen verhältnismäßig hohe Genauigkeiten (beispielsweise Meßfehler < 5 %) aufweisen, um eine zuverlässige Erzeugung des Aufprallerkennungssignals zu gewährleisten. Häufig verwendete Prinzipien sind hier das kapazitive Prinzip, das piezoresistive Prinzip oder das piezoelektrische Prinzip. In allen Fällen bewirkt eine Probemasse eine Änderung der dem jeweiligen Prinzip zugrundeliegenden physikalischen Größe, was eine aufwendige Konstruktion des Beschleunigungssensors bedingt, so daß derartige Sensoren verhältnismäßig hohe Stückkosten aufweisen.

Eine Auslösevorrichtung mit den Merkmalen des Oberbegriffs des Anspruchs 1 ist aus WO 92/05979 A bekannt.

Aufgabe der Erfindung ist es deshalb, eine Auslösevorrichtung der gattungsgemäßen Art zu schaffen, bei der die Aktivierungsvorrichtung elektronischen Diagnosefunktionen unterworfen werden kann und zugleich eine geringere Baugröße und geringere Stückkosten aufweist.

Die Aktivierungsvorrichtung dient zur Erzeugung eines Aktivierungssignals. Die Genauigkeit der Aktivierungsvorrichtung ist weniger entscheidend, da hierdurch lediglich eine grobe Klassifizierung stattfinden soll. Daher kann das zugehörige Schaltelement in die Aktivierungsvorrichtung integriert sein. Im Vergleich zur übrigen Elektronik der Auslösevorrichtung weist eine elektromechanische Aktivierungsvorrichtung außerdem eine verhältnismäßig große Baugröße auf und ist demnach nicht in elektronische Schaltkreise zu integrieren.

Die Aufgabe wird durch die in dem Patentanspruch 1 aufgeführten Merkmale gelöst. Die Erfindung beruht u. a. auf der Erkenntnis, daß ein piezoelektrisches Element als solches bereits ausreichend auf die bei einem Aufprall auftretenden Beschleunigungen reagiert, um als Sensorelement in einer Aktivierungsvorrichtung eingesetzt zu werden. Bisher bestand demgegenüber das Vorurteil, daß piezoelektrische Elemente für diesen Zweck nicht verwendet werden können, da diese zur Aufnahme von Beschleunigungen normalerweise stets von einer Probemasse zu betätigen sind. Dies bedingt Produktionskosten, die weit über denen einer elektromechanischen Aktivierungsvorrichtung liegen, so daß eine Aktivierungsvorrichtung nach dem piezoelektrischen Prinzip bisher nicht als geeignet angesehen wurde. Nach eingehenden Versuchen zeigte sich jedoch, daß ein einzelnes piezoelektrisches Element bereits Signale liefert, die von einer Auswerteschaltung auswertbar sind.

Ein mit der Erfindung erzielter Vorteil besteht insbesondere darin, daß mit der erfindungsgemäßen Aktivierungsvorrichtung elektronische Diagnose- und Testfunktionen durchgeführt werden können. So kann beispielsweise ein Aufprall des Fahrzeugs durch einen an dem piezoelektrischen Element angelenkten elektronischen Impuls simuliert werden, woraufhin die Funktion der nachfolgenden Auswerteschaltung getestet werden kann. Außerdem stellt die erfindungsgemäße Aktivierungsvorrichtung gegenüber herkömmlichen elektromechanischen Aktivierungssensoren ein kleines Bauteil dar, das sehr viel leichter in bestehende elektronische Komponenten der Auslösevorrichtung integriert werden kann. Schließlich ist die erfindungsgemäße Aktivierungsvorrichtung noch um einiges kostengünstiger als die bestehenden elektromechanischen Aktivierungssensoren, da auf piezoelektrische Elemente zurückgegriffen werden kann, die bereits in der Computerindustrie als piezoelektrische Resonatoren in Massen gefertigt werden.

Nach einer bevorzugten Ausführungsform ist vorgesehen, daß das piezoelektrische Element in einem Schwingkreis verschaltet ist, wobei das Aktivierungssignal anspricht, sobald die Resonanzfrequenz des Schwingkreises um einen bestimmten Wert abweicht. Besonders vorteilhaft ist es, hierbei auf Oszillatoren zurückzugreifen, die bereits für die Computerindustrie in Massen gefertigt werden. Es hat sich gezeigt, daß mit derartigen Oszillatoren bereits Genauigkeiten in der Beschleunigungsmessung von unter 10 % erreicht werden können, die für das erzeugende Aktivierungssignal bereits ausreichen. Sollen höhere Genauigkeiten erzielt werden, so wird das piezoelektrische Element zweckmäßigerweise in einem Schwingungszustand betrieben, in dem die Frequenzverstimmung in Abhängigkeit von einer auf das piezoelektrische Element wirkenden Beschleunigung am größten ist. Insbesondere hat es sich als vorteilhaft erwiesen, wenn das piezoelektrische Element mit einer Resonanzfrequenz zwischen 1-20 MHz betrieben wird. Bei einer derartigen anwendungsspezifischen Optimierung des piezoelektrischen Elements konnten Genauigkeiten von ca. 5 % in der Beschleunigungsmessung erreicht werden.

Nach einer anderen bevorzugten Ausführungsform ist vorgesehen, daß das piezoelektrische Element mit einem Integrator verschaltet ist, der eine Ladungsverschiebung an dem piezoelektrischen Element in einen Spannungshub umwandelt. Im Gegensatz zu der Verschaltung als Oszillator werden bei der Verschaltung mit einem Integrator direkt die mechanischen Eigenschaften eines piezoelektrischen Elements ausgenutzt. Diese Ausführungsform ist gegenüber der Oszillatorschaltung noch kostengünstiger, da die Auswerteschaltung lediglich aus einem Komparator zu bestehen braucht, der den Spannungshub des Integrators gegenüber einer vorgegebenen Referenzspannung vergleicht.

Zur Erhöhung der Meßgenauigkeit enthält der erste Beschleunigungssensor zweckmäßigerweise ein weiteres piezoelektrisches oder ein piezoresistives Element und einen Schaltkreis zur Kompensation von Fehlern, der Temperaturschwankungen und Streuungen und Toleranzen kompensiert, die sich aus der Herstellung ergeben. Dadurch läßt sich der Meßfehler des ersten Beschleunigungssensors verringern, während der zweite Beschleunigungssensor keinen Schaltkreis zur Fehlerkompensation umfaßt. Aufgrund der Kompensationsschaltung läßt sich der Meßfehler des ersten Beschleunigungssensors auf unter 5 % verringern. Meßfehler des zweiten Beschleunigungssensors, die größer sind als 10 %, können daher in Kauf genommen werden.

Weitere Einzelheiten und Vorteile der Erfindung werden anhand zweier in der Zeichnung dargestellter Ausführungsbeispiele erläutert. In dieser zeigt:
- Fig. 1: ein Prinzipschaltbild der erfindungsgemäßen Auslösevorrichtung,
- Fig. 2: ein Prinzipschaltbild einer bekannten Aufprallerkennungsvorrichtung,
- Fig. 3: ein Prinzipschaltbild eines ersten Ausführungsbeispiels einer Aktivierungsvorrichtung gemäß der Erfindung und
- Fig. 4: ein Prinzipschaltbild eines zweiten Ausführungsbeispiels einer Aktivierungsvorrichtung gemäß der Erfindung.

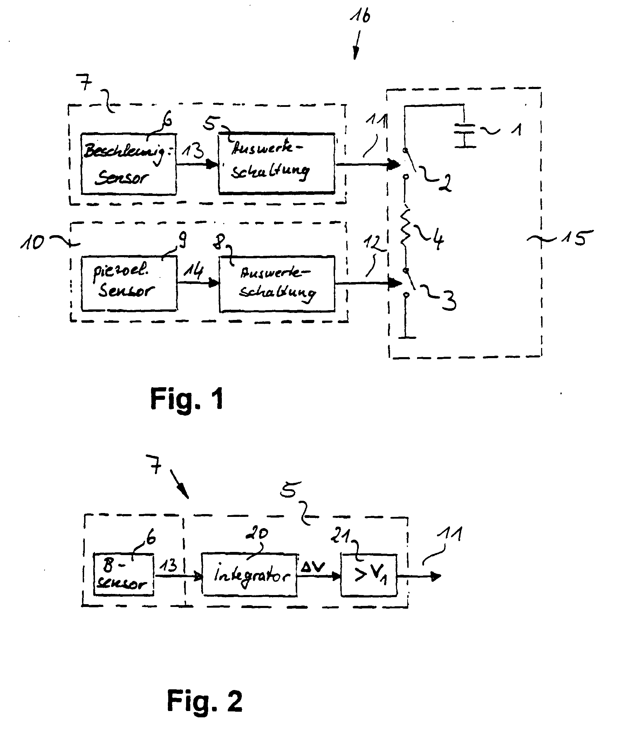

Fig. 1 zeigt ein Prinzipschaltbild der erfindungsgemäßen Auslösevorrichtung 16 mit einer Aufprallerkennungsvorrichtung 7, einer Aktivierungsvorrichtung 10 und einer Auslöseschaltung 15.

Die Auslöseschaltung 15 besteht aus einem Elektrozünder 4, der einen nicht näher dargestellten pyrotechnischen Treibsatz eines Gasgenerators zündet. Der Elektrozünder 4 ist in Reihe geschaltet mit zwei Schaltelementen 2 und 3. Im Fall eines Aufpralls bewirken die Aufprallerkennungsvorrichtung 7 und die Aktivierungsvorrichtung 10 ein Schließen der Schaltelemente 2 und 3, so daß sich die in dem Kondensator 1 gespeicherte Zündenergie über den Elektrozünder 4 entladen kann, was zur Aktivierung der daran angeschlossenen Sicherheitseinrichtungen führt. Üblicherweise werden mehrere Elektrozünder durch eine Auslöseschaltung gezündet, aus Gründen der Vereinfachung ist allerdings nur ein Elektrozünder dargestellt.

Die Aufprallerkennungsvorrichtung 7 umfaßt einen Beschleunigungssensor 6, dessen Ausgangssignal 13 von einer Auswerteschaltung 5 ausgewertet wird. In der Auswerteschaltung 5 findet eine Signalaufbereitung de-s Beschleunigungssignals 13 statt, wobei als Auslösekriterium für die Erzeugung eines Aufprallerkennungssignals das Integral des Beschleunigungssignals 13 über einen gewissen Zeitraum dient. Sobald das Aufprallerkennungssignal 11 am Ausgang der Auswerteschaltung 5 anliegt, schließt das Schaltelement 2.

Die Aktivierungsvorrichtung 10 umfaßt einen piezoelektrischen Sensor 9, dessen Ausgangssignal 14 einer Auswerteschaltung 8 zugeführt wird. Als Kriterium für das Aktivierungssignal 12 dient eine bestimmte-Änderung des Ausgangssignals 14 innerhalb einer vorgegebenen Zeit. Sobald das Aktivierungssignal 12 am Ausgang der Auswerteschaltung 8 anliegt, schließt das Schaltelement 3.

Fig. 2 zeigt ein Prinzipschaltbild einer bekannten Aufprallerkennungsvorrichtung. Die Auswerteschaltung 5 umfaßt demnach einen Integrator 20 mit einem nachfolgenden Komparator 21. Das Ausgangssignal 13 am Ausgang des Beschleunigungssensors 6 ist proportional zur Beschleunigung des Fahrzeugs, so daß bei Integration dieses Signals über einen gewissen Zeitraum am Ausgang des Integrators 20 ein zu einer Geschwindigkeitsänderung des Fahrzeugs innerhalb des vorgegebenen Zeitraums proportionales Signal anliegt. Sobald das Geschwindigkeitsänderungssignal Δv am Ausgang des Integrators einen bestimmten Schwellenwert v₁ überschreitet, wird am Ausgang des Komparators 21 das Aufprallerkennungssignal 11 erzeugt.

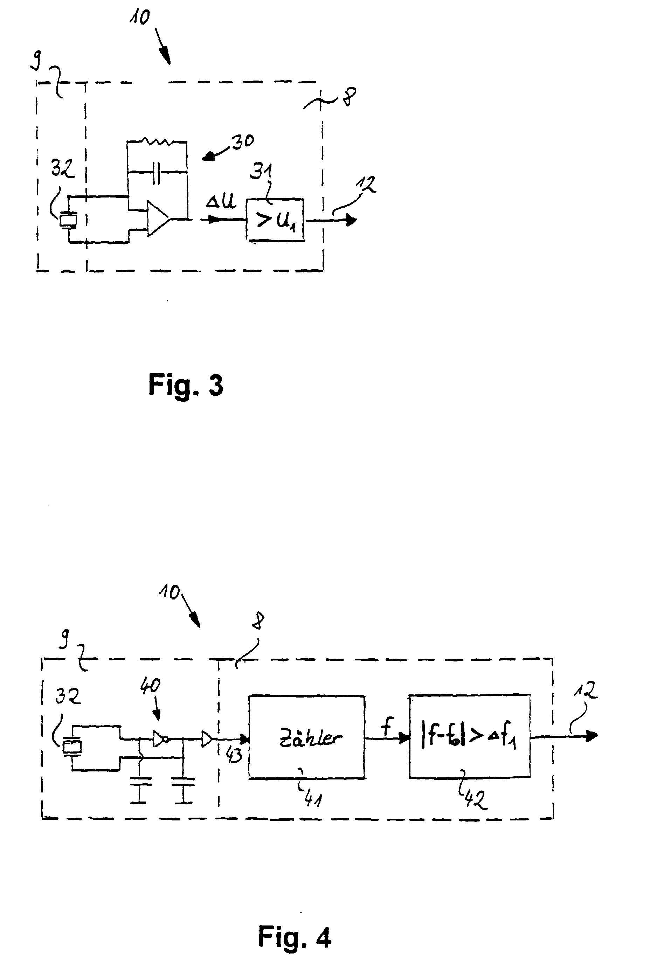

Fig. 3 zeigt ein Prinzipschaltbild eines ersten Ausführungsbeispiels einer Aktivierungsvorrichtung 10 gemäß der Erfindung. Der piezoelektrische Sensor 9 besteht in diesem Ausführungsbeispiel aus einem einfachen piezoelektrischen Element 32. Die nachfolgende Auswerteschaltung 8 umfaßt einen Integrator 30 mit einem nachgeschaltetem Komparator 31. Eine Beschleunigung bewirkt aufgrund den am piezoelektrischen Element 32 angreifenden Beschleunigungskräfte eine Ladungsverschiebung am piezoelektrischen Element, die über zwei Elektroden abgegriffen und dem Integrator 30 zugeführt wird. Der Integrator 30 besteht dabei aus einem entsprechend geschalteten Operationsverstärker und wandelt den Ladungsimpuls in einen Spannungshub ΔU um. Überschreitet der Spannungshub ΔU eine vorgegebene Referenzspannung U₁, so spricht der Komparator 31 an und erzeugt ein Aktivierungssignal 12.

Fig. 4 zeigt ein Prinzipschaltbild eines zweiten Ausführungsbeispiels einer Aktivierungsvorrichtung gemäß der Erfindung. Der piezoelektrische Sensor 9 besteht in diesem Ausführungsbeispiel aus einem in Massenfertigung hergestellten Oszillator. Das piezoelektrische Element 32 wird in einem derartigen Oszillator als piezoelektrischer Resonator betrieben, indem die Elektroden des piezoelektrischen Elements 32 mit einem Schwingkreis 40 entsprechend verschaltet sind. Am Ausgang 43 des Schwingkreises 40 liegt somit eine Wechselspannung an, deren Frequenz durch einen nachfolgenden Frequenzzähler 41 ausgewertet wird. Gegenüber dem Ausführungsbeispiel in Fig. 3 wird bei einer Beschleunigung des Fahrzeugs nicht der Effekt der Ladungsverschiebung, sondern der Effekt der sich ändernden Resonanzfrequenz des piezoelektrischen Elements ausgenutzt. Diese Frequenzänderung wird durch die Vergleichsschaltung 42 ausgewertet, wobei die Vergleichsschaltung ein Aktivierungssignal 12 erzeugt, sobald die Frequenz f am Ausgang des Zählers 41 gegenüber einer Resonanzfrequenz f₀ um einen Betrag Δf₁ abweicht.

Nach Fig. 1 ist das piezoelektrische Element 32 Teil eines zweiten Beschleunigungssensors 9. Die Schaltung wird so ausgelegt, daß der Meßfehler des ersten Beschleunigungssensors 6 kleiner ist als der des zweiten Beschleunigungssensors 9. Der erste Beschleunigungssensor 6 kann ein weiteres piezoelektrisches oder ein piezoresistives Element und einen Schaltkreis zur Fehlerkompensation umfassen, der Fehler kompensiert, die sich beispielsweise aus Temperatureinflüssen oder aus Streuungen und Toleranzen bei der Herstellung ergeben. Aufgrund dieses fehlerkompensierenden Schaltkreises wird der Meßfehler kleiner. Der zweite Beschleunigungssensor 9 braucht keine Kompensationsschaltung zu erhalten, so daß bei diesem Fehler im Bereich von 15% auftreten können, während bei dem ersten mit der Kompensationsschaltung versehenen Beschleunigungssensor Fehler nur im Bereich von etwa 2% zu erwarten sind.

## Patentansprüche

1. Auslösevorrichtung (16) für Fahrzeuge zum Auslösen mindestens einer Sicherheitseinrichtung bei einem Aufprall,
mit einer einen ersten Beschleunigungssensor (6) und eine Auswerteschaltung (5) umfassenden Aufprallerkennungsvorrichtung (7), die bei einem Aufprall ein Aufprallerkennungssignal (11) erzeugt,
mit einer Aktivierungsvorrichtung (10), die ein piezoelektrisches Element (32) umfaßt, das Teil eines zweiten Beschleunigungssensors (9) ist, zur Erzeugung eines Aktivierungssignals (12), und
mit einer die Sicherheitsvorrichtung auslösenden Auslöseschaltung (15), wobei das Auslösen der Sicherheitseinrichtung erfolgt, sobald das Aufprallerkennungssignal (11) und das Aktivierungssignal (12) an der Auslöseschaltung (15) anliegen,
**dadurch gekennzeichnet,**
**daß** der Meßfehler des ersten Beschleunigungssensors (6) kleiner ist als der des zweiten Beschleunigungssensors (9).

2. Auslösevorrichtung nach Anspruch 1, **dadurch gekennzeichnet, daß** das piezoelektrische Element (32) in einem Schwingkreis (40) verschaltet ist, wobei das Aktivierungssignal (12) anspricht, sobald die Resonanzfrequenz des Schwingkreises (4) um einen bestimmten Wert abweicht.

3. Auslösevorrichtung nach Anspruch 2, **dadurch gekennzeichnet, daß** das piezoelektrische Element (32) in einem Schwingungszustand betrieben wird, in dem die Frequenzverstimmung in Abhängigkeit von einer auf das piezoelektrische Element wirkenden Beschleunigung am größten ist.

4. Auslösevorrichtung nach Anspruch 3, **dadurch gekennzeichnet, daß** das piezoelektrische Element (32) mit einer Resonanzfrequenz zwischen 1-20 MHz betrieben wird.

5. Auslösevorrichtung nach Anspruch 1, **dadurch gekennzeichnet, daß** das piezoelektrische Element (32) mit einem Integrator (30) verschaltet ist, der eine Ladungsverschiebung an dem piezoelektrischen Element in einen Spannungshub umwandelt.

6. Auslösevorrichtung nach Anspruch 5, **dadurch gekennzeichnet, daß** das Aktivierungssignal (12) anspricht, sobald der Spannungshub eine vorgegebene Referenzspannung überschreitet.

7. Auslösevorrichtung nach einem der Ansprüche 1 bis 6, **dadurch gekennzeichnet, daß** der erste Beschleunigungssensor (6) ein weiteres piezoelektrisches oder ein piezoresistives Element und einen Schaltkreis zur Kompensation von Fehlern enthält, der beispielsweise Fehler kompensiert, die sich aus Temperaturschwankungen und Herstellungsungenauigkeiten der Bauteile ergeben, um den Meßfehler zu verringern, und daß der zweite Beschleunigungssensor (9) keinen Schaltkreis zur Fehlerkompensation umfaßt

8. Auslösevorrichtung nach Anspruch 7, **dadurch gekennzeichnet, daß** der Meßfehler des ersten Beschleunigungssensors (6) kleiner als 5 % und der Meßfehler des zweiten Beschleunigungssensors (9) größer als 10 % ist.

9. Auslösevorrichtung nach einem der Ansprüche 1 bis 8, **dadurch gekennzeichnet, daß** der piezoelektrische Oszillator (32) einen in Massenfertigung hergestellten piezoelektrischen Oszillator umfaßt.

10. Verwendung eines in Massenfertigung hergestellten piezoelektrischen Oszillators als Sensorelement (9) in einer Auslösevorrichtung (16) nach Anspruch 1.

## Claims

1. Triggering device (16) for vehicles for triggering at least one safety device in the event of an impact,
having an impact detection device (7) which comprises of a first acceleration sensor (6) and an evaluation device (5) and which generates an impact detection signal (11) in the event of an impact,
having an activation device (10) which comprises a piezoelectric element (32) which is part of a second acceleration sensor (9) and has the purpose of generating an activation signal (12), and
having a triggering circuit (15) which triggers the safety device, the safety device being triggered as soon as the impact detection signal (11) and the activation signal (12) are present at the triggering circuit (15),
**characterized in that**
the measuring error of the first acceleration sensor (6) is smaller than that of the second acceleration sensor (9).

2. Triggering device according to Claim 1, **characterized in that** the piezoelectric element (32) is connected in an oscillatory circuit (40), the activation signal (12) responding as soon as the resonance frequency of the oscillatory circuit (4) deviates by a specific value.

3. Triggering device according to Claim 2, **characterized in that** the piezoelectric element (32) is operated in an oscillating state in which the frequency detuning as a function of an acceleration acting on the piezoelectric element is at a maximum.

4. Triggering device according to Claim 3, **characterized in that** the piezoelectric element (32) is operated with a resonance frequency between 1-20 MHz.

5. Triggering device according to Claim 1, **characterized in that** the piezoelectric element (32) is connected to an integrator (30) which converts a charge shift at the piezoelectric element into a voltage excursion.

6. Triggering device according to Claim 5, **characterized in that** the activation signal (12) responds as soon as the voltage excursion exceeds a predefined reference voltage.

7. Triggering device according to one of Claims 1 to 6, **characterized in that** the first acceleration sensor (6) contains a further piezoelectric or a piezoresistive element and a circuit for compensating errors which, for example, compensates errors which result from temperature fluctuations and manufacturing imprecisions of the components in order to reduce the measuring error, and **in that** the second acceleration sensor (9) does not comprise a circuit for error compensation.

8. Triggering device according to Claim 7, **characterized in that** the measuring error of the first acceleration sensor (6) is smaller than 5%, and the measuring error of the second acceleration sensor (9) is greater than 10%.

9. Triggering device according to one of Claims 1 to 8, **characterized in that** the piezoelectric oscillator (32) comprises a piezoelectric oscillator which is fabricated by large-scale manufacture.

10. Use of a piezoelectric oscillator fabricated by large-scale manufacture as a sensor element (9) in a triggering device (16) according to Claim 1.

## Revendications

1. Dispositif de déclenchement (16) pour des véhicules pour déclencher au moins une installation de sécurité lors d'un choc, avec un dispositif d'identification de chocs (7) comprenant un premier capteur d'accélération (6) et un circuit d'évaluation (5) qui, lors d'un choc, produit un signal d'identification de choc (11), avec un dispositif d'activation (10) qui comprend un élément piézoélectrique (32) qui fait partie d'un deuxième capteur d'accélération (9), pour produire un signal d'activation (12) et avec un circuit de déclenchement (15) déclenchant le dispositif de sécurité, par quoi le déclenchement de l'installation de sécurité a lieu, dès que le signal d'identification de choc (11) et le signal d'activation (12) s'appliquent au circuit de déclenchement (15), **caractérisé en ce que** l'erreur de mesure du premier capteur d'accélération (6) est plus petite que celle du deuxième capteur d'accélération (9).

2. Dispositif de déclenchement selon la revendication 1, **caractérisé en ce que** l'élément piézoélectrique (32) est monté dans un circuit oscillant (40), où le signal d'activation (12) répond dès que la fréquence de résonance du circuit oscillant (4) dévie d'une certaine valeur.

3. Dispositif de déclenchement selon la revendication 2, **caractérisé en ce que** l'élément piézoélectrique (32) est amené à fonctionner dans un état oscillant dans lequel le désaccord des fréquences, en fonction d'une accélération agissant sur l'élément piézoélectrique, est le plus grand.

4. Dispositif de déclenchement selon la revendication 3, **caractérisé en ce que** l'élément piézoélectrique (32) est amené à fonctionner à une fréquence de résonance entre 1-20 MHz.

5. Dispositif de déclenchement selon la revendication 1, **caractérisé en ce que** l'élément piézoélectrique (32) est connecté à un intégrateur (30) qui transforme un transfert de charge à l'élément piézoélectrique en une excursion de tension.

6. Dispositif de déclenchement selon la revendication 5, **caractérisé en ce que** le signal d'activation (12) réagit dès que l'excursion de tension dépasse une tension de référence prédéterminée.

7. Dispositif de déclenchement selon l'une des revendications 1 à 6, **caractérisé en ce que** le premier capteur d'accélération (6) comprend un élément piézoélectrique ou piézorésistif supplémentaire et un circuit de commutation pour la compensation d'erreurs, qui compense par exemple des erreurs qui résultent de variations de température et d'imprécisions de fabrication des composants, pour réduire l'erreur de mesure, et **en ce que** le deuxième capteur d'accélération (9) ne comprend pas de circuit de commutation pour la compensation des erreurs.

8. Dispositif de déclenchement selon la revendication 7, **caractérisé en ce que** l'erreur de mesure du premier capteur d'accélération (6) est plus petite que 5% et l'erreur de mesure du deuxième capteur d'accélération (9) est plus grande que 10%.

9. Dispositif de déclenchement selon l'une des revendications 1 à 8, **caractérisé en ce que** l'oscillateur piézoélectrique (32) comprend un oscillateur piézoélectrique réalisé lors d'une fabrication en série.

10. Utilisation d'un oscillateur piézoélectrique réalisé par une fabrication en série comme élément capteur (9) dans un dispositif de déclenchement (16) selon la revendication 1.
